# EUROPEAN PATENT SPECIFICATION

(11) **EP 3 338 996 B1**
(45) Date of publication and mention of the grant of the patent: **10.11.2021**
(21) Application number: 17207762.0
(22) Date of filing: 15.12.2017
(51) Int. Cl.: B29C 48/34, B29C 48/156, B29C 48/25, B29C 48/21, B29C 48/07, B29D 30/38

(54) **APPARATUS FOR PRODUCING LAMINATED FABRIC PLY STRIPS**
VORRICHTUNG ZUR HERSTELLUNG VON STREIFEN AUS LAMINIERTEN STOFFLAGEN
APPAREIL DE PRODUCTION DE BANDES DE TISSU STRATIFIÉES

(30) Priority: 20.12.2016 US 201615384374
(43) Date of publication of application: 27.06.2018
(73) Proprietor: The Goodyear Tire & Rubber Company, Akron, OH 44316 (US)
(72) Inventor: DYRLUND, Christopher David, Canton, OH 44705 (US); CHEN, Hongbing, Broadview Heights, OH 44147 (US)
(74) Representative: Kutsch, Bernd

(56) References cited:
- EP-A1- 3 034 268
- WO-A1-2016/167646
- FR-A2- 2 196 893
- US-A- 3 997 285
- US-A- 4 274 821
- US-A- 5 382 401

## Description

### Field of the Invention

This invention relates to pneumatic tires, and more particularly, the invention relates to ply constructions for tires.

### Background of the Invention

Modern passenger tires are typically constructed utilizing two or more layers of ply or a fabric woven from reinforcement filaments or cords. Such ply materials are typically made from an apparatus having a guide insert having passages through which the cabled reinforcement cords pass. If one of the reinforcement cords breaks, the apparatus typically needs to be disassembled, the guide insert removed, and then individually rethreading of the cords in the insert needs to occur. This procedure results in a significant loss on productivity. Thus, it is desired to have an improved apparatus that allows replacement of one or more cords without the disruption of the remaining cords, and in a short period of time in order to minimize loss of production.

EP-A-3 034 268 describes a cross-head die assembly in accordance with the preamble of claim 1.

US-A-3,997,285 describes an apparatus for molding an extruded product containing reinforcing material. An injection pipe is attached to two extruding machines so that a Y-shaped forcing passage is formed and the extruding materials are injected from two different directions. A curved, streamlined shape throttle is provided for suppressing and controlling the flow speed in the center and uniformly regulating the flow.

Further cross-head dies for extruding reinforced fabrics are described in USA-4,274,821 and US-A-5,382,401 and FR-A-2 116 893.

### Summary of the Invention

The invention relates to a cross-head die assembly for use with an extruder in accordance with claim 1.

Dependent claims refer to preferred embodiments of the invention.

One or more embodiments of the present invention provide a cross-head die assembly for use with an extruder, the cross-head die assembly comprising an inlet section having an inlet for receiving flow from the extruder, an upper support block removably connected to a first side of the interior section, and a lower block removably connected to a second side of the interior section, a first flow passage being located between the upper support block and the interior section and being in fluid communication with the inlet, a second flow passage being located between the interior section and the lower support block and being in fluid communication with the inlet, said cross-head die assembly further comprising a removably mounted die located at an outlet end of the assembly, said first and second flow passage being in fluid communication with an inlet of the die, said interior section further comprising an interior slot which extends from a first side of the assembly to the inlet of the die, wherein the first and second flow passage each have an inlet end and a raised center rib positioned at the inlet end.

In a preferred aspect of the invention, the inlet area of each flow passage is greater than the outlet area of each flow passage.

In a preferred aspect of the invention, a depth of each flow passage decreases from the inlet end to the outlet end.

In a preferred aspect of the invention, each flow channel has an interior edge having a bulbous protrusion.

In a preferred aspect of the invention, the area ratio of the exit to the inlet is in the range of 0.8 to 0.98. or in the range of from 0.9 to 0.96.

In a preferred aspect of the invention, the width of the flow channel increases from the inlet to the outlet.

In a preferred aspect of the invention, cross-head die assembly comprises a removable cassette positioned in the interior slot.

In a preferred aspect of the invention, the upper support block has a removable flow insert and/or the lower support block has a removable flow insert.

In a preferred aspect of the invention, the first side of the interior section has a removable flow insert and/or the second side of the interior section has a removable flow insert.

In a preferred aspect of the invention, the cassette has a plurality of holes for receiving a ply cord.

In a preferred aspect of the invention, the cassette has a plurality of holes for receiving a ply cord, wherein each hole has an alignment groove which extends though said hole.

In a preferred aspect of the invention, the slot has upper and lower sidewalls and lateral sidewalls.

In a preferred aspect of the invention, the slot has an outlet end, and wherein a nose of the cassette seals the outlet of the slot from flow, so that the slot is isolated from the flow.

In a preferred aspect of the invention, the die has a removable insert.

In a preferred aspect of the invention, the second side of the interior section has a removable flow insert and wherein the removable insert has a sealing edge positioned against the die outlet hole.

The invention provides in a second aspect a method of making ply comprising: extruding a plurality of cords through a cross-head extruder, wherein the cords are aligned in a die, and forming a base layer of rubber wherein the cords are impregnated within the base layer.

### Brief Description of the Drawings

Figure 1 is a perspective view of a cross-head die assembly of the present invention shown with a gear pump assembly in phantom.
Figure 2 is a cross-sectional view of the cross-head die assembly of Figure 1 in the direction 2-2.
Figure 3 is a cross-sectional view of the cross head die assembly of Figure 1 in the direction 3-3.
Figure 4 is a partially exploded perspective view of the cross head die assembly of Figure 1, showing the lower flow channel.
Figure 5 is a perspective, partially exploded view of the cross head die assembly of Figure 1 showing the upper flow channel upper insert.
Figure 6 is a perspective, partially exploded rear view of the cross head die assembly of Figure 1.
Figure 7 is a perspective view of the interior section of the cross head die assembly of Figure 1 showing the rubber flow path from the flow entrance to the flow outlet.

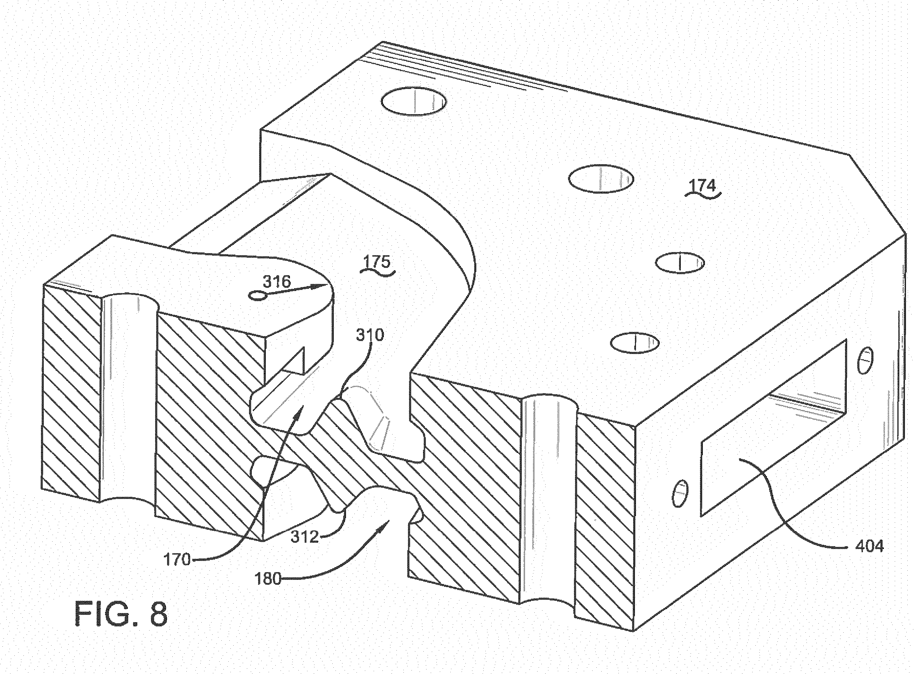

Figure 8 is a close up perspective view of the interior section of the cross head die assembly of Figure 1 showing the rubber flow path from the flow entrance to the flow outlet.
Figure 9 is a cross-sectional view of the cross head die assembly of figure 1 showing the cord cassette removed.
Figure 10 is a perspective view of the cross head die assembly of Figure 1 showing the cords path through the cord cassette, and the cord guide and upper and lower dies.

### Description of the Preferred Embodiments of the Invention

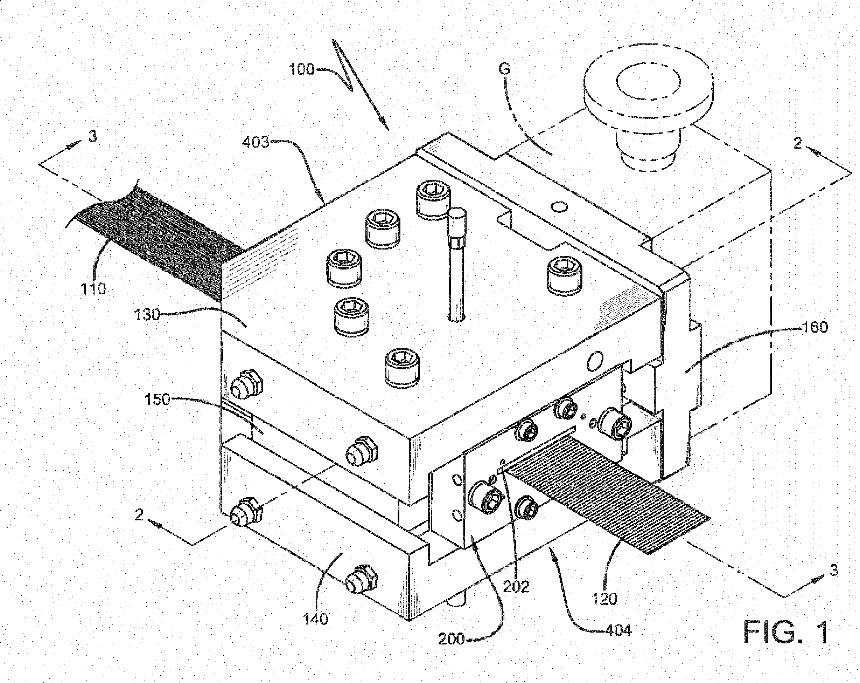

Figure 1 illustrates a cross-head die assembly 100 connected to the gear pump or extruder assembly G shown in phantom. The assembly G supplies the elastomeric material to the cross-head die assembly. As shown in Figure 1, a plurality of parallel reinforcement cords 110 enter the cross-head die assembly 100 and are encased with elastomeric material to form a strip of reinforced ply material 120 which is output from the outlet passageway 202 of the die 200. The strip has a typical width of 80 mm with a thickness of 1.2 mm.

The cross-head die assembly 100 has an upper support block 130, a lower support block 140 and an interior section 150. An inlet section 160 is located on one end of the cross-head die assembly and is connected to the upper support block 130, the lower support block 140 and the interior section 150. The upper support block 130, lower support block 140 and the interior section are all removably connected to the assembly 100.

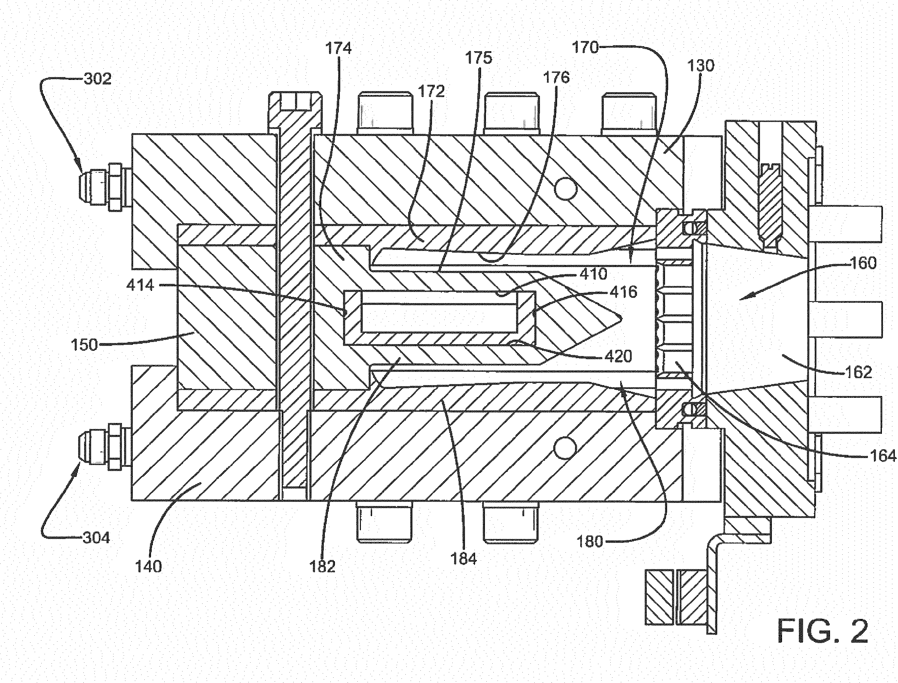

A cross-section of the cross-head die assembly 100 is shown in Figure 2. The inlet section 160 has an inlet channel 162 for receiving elastomer material from an extruder (not shown) or extruder-gear pump assembly G. The inlet channel 162 communicates elastomer flow to a screen filter 164. As shown in Figure 1, the inlet section 160 is easily removed from the assembly 100 without the need to completely disassemble the die assembly in order to replace or access the screen filter 164. The screen filter 164 is easily removed and replaced.

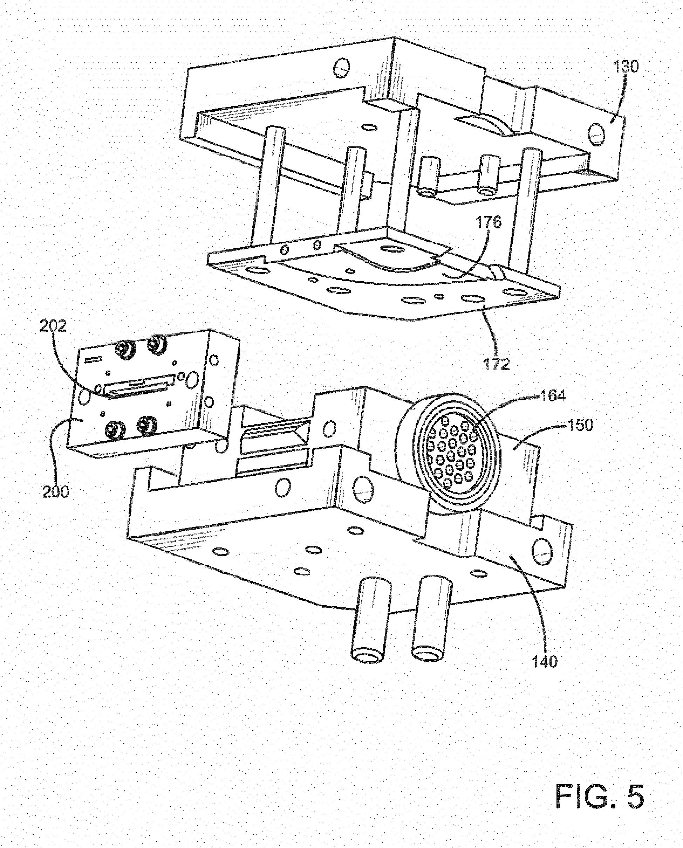

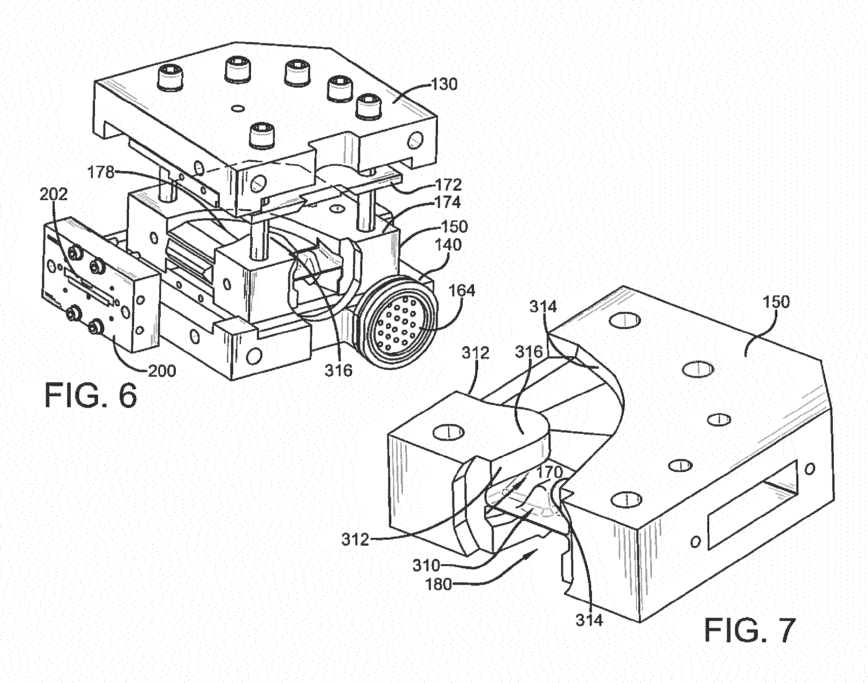

As shown in Figure 2, elastomer flow from the extruder enters the assembly 100 and is separated into an upper flow channel 170 and a lower flow channel 180. The upper flow channel 170 is formed from a removable upper insert plate 172 and a removable lower insert plate 174. The removable upper insert plate 172 (Figure 5) has a 90 degree flow path 176 that cooperates with the 90 degree flow path 178 (Figure 6) of the lower insert plate 184 to form the upper flow channel 170. Likewise, the lower flow channel 180 is formed between a removable upper insert plate 182 (Figure 2) and a lower insert plate 184 with 90 degree flow paths that cooperate to form the lower flow channel 180.

As shown in Figure 7, the inlet to the upper and lower flow channel 170, 180 has a raised center rib 310,312 positioned at the entrance of each flow channel (i.e., there are two raised center ribs 310,312). This raised center rib 310 encourages the rubber flow to be directed to the inner edges 312 and outer edges 314 of the flow channel. The inner edge 312 has an enlarged radius. The raised center rib 310 is preferably V shaped.

The inner edge 312 of each flow channel has a bulbous extension 316 that has a large radius R in the range of 20 to 50 inches, more preferably 25 to 35 inches. The bulbous extension 316 helps to direct the rubber flow more towards the outside edge 314 then the inside edge 312, as well as to increase the velocity of the flow. As shown in Figure 7, the area of section A1 is greater than the area of section A2, while the area of section A2 is greater than the area of section A3, and the area of section A3 is greater than section A4. Thus, while the flow channel appears to increase in area from A1 to A4, the area actually decreases from A1 at the inlet to A4 at the exit. The area ratio of A4/A1 is in the range of from 0.80 to 0.99, and more preferably 0.85-0.99.

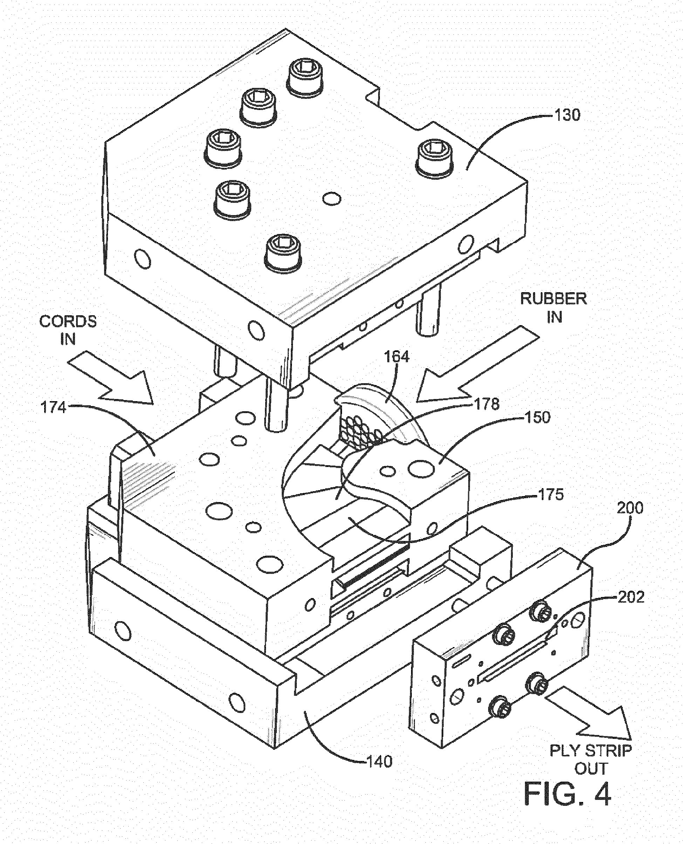

As shown in Figure 4, the depth of the flow channel 170 is greater at the inlet than the outlet. The depth of the flow channel decreases from the inlet to the outlet. The width of the flow channel varies from entry to exit, initially decreasing than increasing near the exit. Cross sectional area is the important feature that decreases from entry to exit.

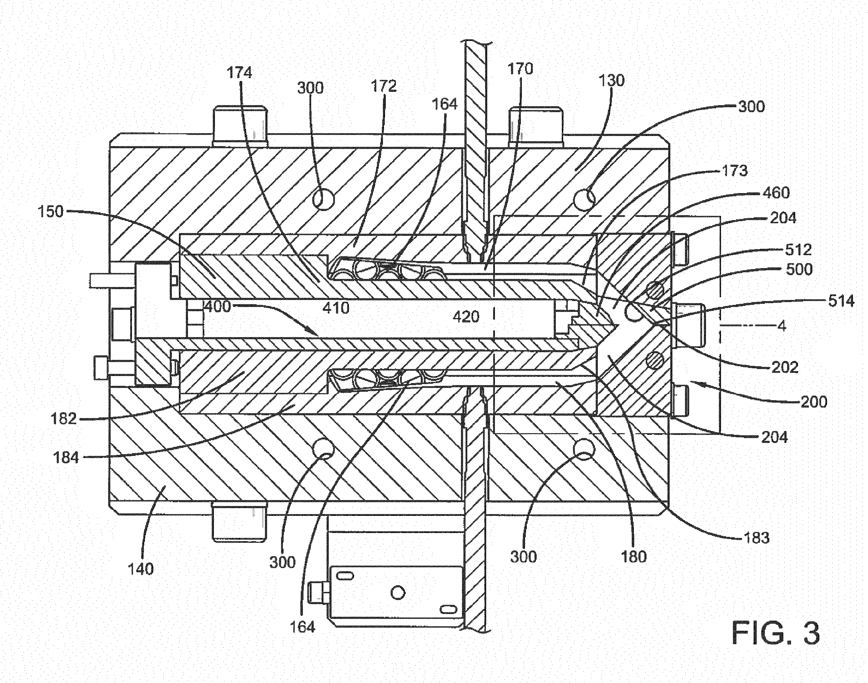

Preferably, the lower insert plate 174 and the upper insert plate 182 have a tapered outlet end 173, 183(Figure 3). The elastomer flow from the upper and lower flow channel 170, 180 enters the profile die 200. The profile die 200 is removably mounted to the cross-head assembly 100. As shown in Figure 1, the profile die 200 has an outlet hole 202 for exit of the ply strip from the assembly 100.

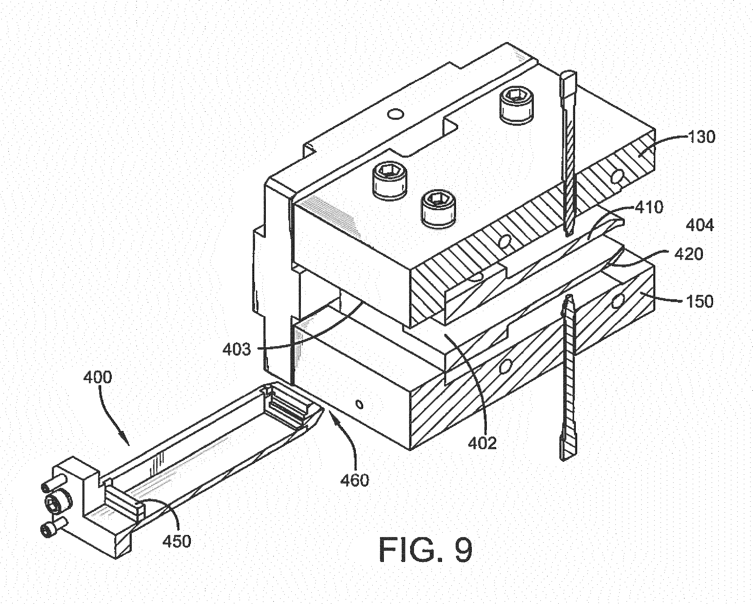

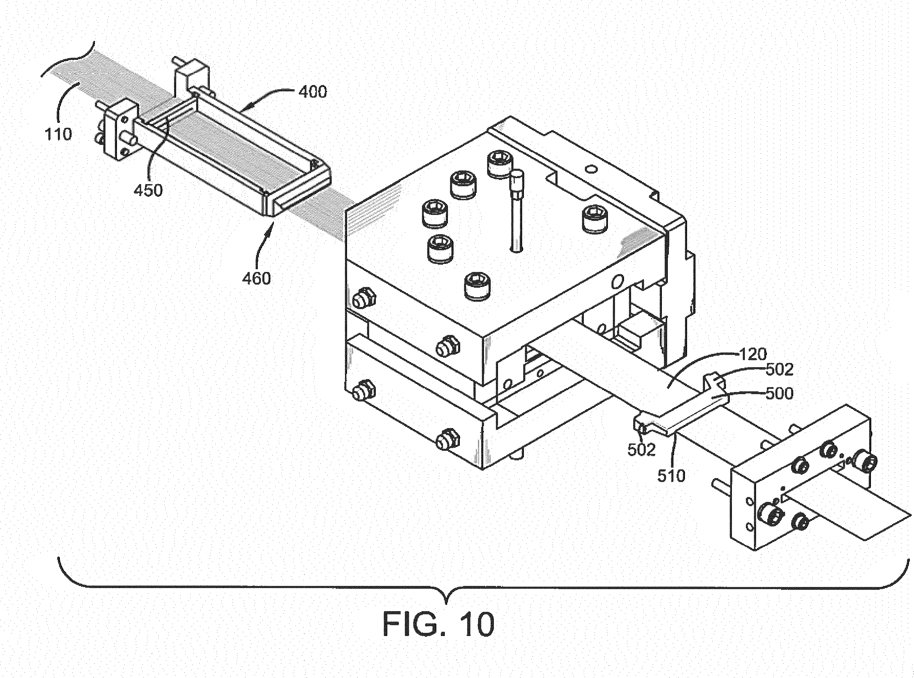

As shown in Figure 9, the cross-head die assembly 100 has a removable cassette 400 for feeding the reinforcement cords 110 into the cross-head die assembly in parallel alignment. The cassette 400 is received in a rectangular shaped slot 402 located in interior section 150. As shown in Figure 9, the rectangular slot 402 extends from the inlet side 402 of the cross-head die assembly to the outlet side 404. The slot 402 is separated and isolated from the elastomer flow in the upper and lower flow channels 170, 180. The slot has upper and lower walls 410, 412 and first and second sidewalls 414, 416 which isolate the cassette and therefore allows the cassette to be removed from the assembly without disruption of the elastomer flow. Figure 10 illustrates the cords 110 in the cassette 400. The cords 110 are threaded in the slot 451 of cord guide 450. The front end of the cassette has a nose 460 that is detachable from the cassette. The nose 460 has a row of closely spaced outlet holes 462, wherein each hole 462 receives a cord. The outlet holes 462 are positioned adjacent to a lip 471 which protrudes axially from the outer surface of the nose. The lip 471 is formed by the removal or relief of a portion of the upper surface of the nose. A plurality of alignment grooves 464 are positioned on the lip 471 adjacent each outlet hole 462. The alignment groove 464 extends through the hole as shown in Figures 12, 13 and 16. The alignment grooves 464 together with the outlet holes 462 maintain the proper separation, spacing and alignment of each individual cord so that the reinforcement ply strip is formed with parallel and properly spaced cords as shown in Figure 11C. Further, the individual holes for each cord allow for the easy replacement of a single broken cord without disrupting the remaining cords.

The nose 460 of the cassette is positioned adjacent the die assembly 200. The die assembly 200 further includes an insert 500 which is pressed into the die assembly, and is not held in place by any fasteners. It includes threaded holes to allow jack bolts for removal. The insert has flanged ends 502 which are positioned in the slot ends 506. The insert 500 has a front sealing edge 510 that is positioned in the insert slot 504. The insert 500 functions to seal the die edges to prevent leakage, particularly near the edges of the die. As pressure increases in the die assembly, the insert is pushed further into the die, resulting in the insert sealing edge 510 forming a seal with the die.

The nose 460 of the cassette has an upper and lower outer contoured surface 461, 465. The upper contoured surface 461 of the nose is positioned adjacent the angled passageway 204. As the elastomer flows from the upper and lower channel, it is squeezed through the angled passageway 204 and along the outer contoured surface 461,465 of the nose 460. The elastomer flows down the upper outer surface of the nose, and then meets the cords at the lip 471 and encapsulates the reinforcement cords 110 along the lip 471. The alignment grooves 464 of the lip 471 maintain stability by retaining the cord spacing and alignment while the elastomer flows onto the cords. The flow from the bottom channel flows along the bottom surface of the nose and meets the cord after the upper portion of the cords have already been coated with rubber. The elastomer and cords then pass through the angled passageway 204 and then through the die outlet hole 202.

The die 200 is removable to allow for easier cord threading. If a cord breaks or the cords need to be changed out, the cassette can be easily removed from the assembly. The die 200 and insert 500 can also be removed for cord change. If a cord is broken, it can be rethreaded into the guide 450 and the outlet hole 462 of the cassette. A broken cord can be replaced without rethreading the remaining cords. When the cassette is removed, the rubber or elastomer remains isolated in the flow channels. A complete change out of the cord package may occur within 5 minutes. The flow channel inserts may also be changed out.

As shown in Figure 2, the cross-head die assembly 100 may further comprise one or more cooling/heating channels 300 with a coolant inlet 302 and coolant exit 304.

In summary, the improved cross-head die assembly provides for individually fed cord strands captured with through hole guide, with no sharp edges to break the cords. The assembly allows for easy change out of a cord package in minutes while the elastomer remains isolated in the flow channels. A broken cord can be replaced without the need to rethread all of the remaining cords. The assembly further provides for an integrated screen filter and replaceable flow channel inserts which allow the flow balance of the system to be modified.

## Claims

1. A cross-head die assembly for use with an extruder, the cross-head die assembly (100) comprising:
an inlet section (160) having an inlet for receiving flow from the extruder;
an upper support block (130) removably connected to a first side of an interior section (150);
a lower support block (150) removably connected to a second side of the interior section (150);
a first flow passage (170) being located between the upper support block (130) and the interior section (150) and being in fluid communication with the inlet;
a second flow passage (180) being located between the interior section (150) and the lower support block (150) and being in fluid communication with the inlet;
wherein the cross-head die assembly (100) further comprises a removably mounted die (200) located at an outlet end of the assembly (100);
wherein the first and the second flow passage (170, 180) are in fluid communication with an inlet of the die (200); and
wherein the interior section (150) further comprises an interior slot (402) which extends from a first side of the assembly (100) to the inlet of the die (200);
**characterized in that** the first and second flow passages (170, 180) each have an inlet end and a raised center rib (310, 312) positioned at the inlet end.

2. The cross-head die assembly of claim 1 wherein the inlet area of each flow passage (170, 180) is greater than the outlet area of each flow passage (170, 180).

3. The cross-head die assembly of claim 1 or 2 wherein a depth of each flow passage (170, 180) decreases from the inlet end to the outlet end.

4. The cross-head die assembly of at least one of the previous claims wherein each flow channel (170, 180) has an interior edge having a bulbous protrusion (316).

5. The cross-head die assembly of at least one of the previous claims wherein the area ratio of the exit to the inlet is in the range of from 0.8 to 0.98, preferably from 0.9 to 0.96.

6. The cross-head die assembly of at least one of the previous claims wherein the width of the flow channel (170, 180) increases from the inlet to the outlet.

7. The cross-head die assembly of at least one of the previous claims further comprising a removable cassette (400) positioned in the interior slot (402).

8. The cross-head die assembly of at least one of the previous claims wherein the upper support block (130) has a removable flow insert and/or the lower support block (170) has a removable flow insert.

9. The cross-head die assembly of at least one of the previous claims wherein the first side of the interior section (150) has a removable flow insert and/or the second side of the interior section (150) has a removable flow insert.

10. The cross-head die assembly of at least one of the previous claims wherein the cassette (400) has a plurality of holes (462) for receiving a ply cord.

11. The cross-head die assembly of claim 10 wherein each hole (462) has an alignment groove (464) which extends though said hole.

12. The cross-head die assembly of at least one of the previous claims wherein the slot has upper and lower sidewalls and lateral sidewalls.

13. The cross-head die assembly of at least one of the previous claims wherein the slot (402) has an outlet end, wherein a nose (460) of the cassette (400) seals the outlet of the slot (402) from flow, so that the slot (402) is isolated from the flow.

14. The cross-head die assembly of at least one of the previous claims wherein the die (200) has a removable insert (500).

15. The cross-head die assembly of claim 9 or 14 wherein the removable insert (500) has a sealing edge (510) positioned against the die outlet hole.

## Patentansprüche

1. Querspritzkopfanordnung zur Verwendung mit einem Extruder, wobei die Querspritzkopfanordnung (100) umfasst:
einen Einlassbereich (160), der einen Einlass zum Aufnehmen von Strömung von dem Extruder aufweist;
einen oberen Stützblock (130), der mit einer ersten Seite eines Innenbereichs (150) entfernbar verbunden ist;
einen unteren Stützblock (150), der mit einer zweiten Seite des Innenbereichs (150) entfernbar verbunden ist;
einen ersten Strömungskanal (170), der sich zwischen dem oberen Stützblock (130) und dem Innenbereich (150) befindet und mit dem Einlass in Fluidverbindung steht;
einen zweiten Strömungskanal (180), der sich zwischen dem Innenbereich (150) und dem unteren Stützblock (150) befindet und mit dem Einlass in Fluidverbindung steht;
wobei die Querspritzkopfanordnung (100) ferner einen entfernbar montierten Kopf (200) umfasst, der sich an einem Auslassende der Anordnung (100) befindet;
wobei der erste und der zweite Strömungskanal (170, 180) in Fluidverbindung mit einem Einlass des Kopfes (200) stehen; und
wobei der Innenbereich (150) ferner einen Innenschlitz (402) umfasst, der sich von einer ersten Seite der Anordnung (100) zu dem Einlass des Kopfes (200) erstreckt;
**dadurch gekennzeichnet, dass** der erste und der zweite Strömungskanal (170, 180) jeweils ein Einlassende und eine erhabene Mittelrippe (310, 312) aufweisen, die an dem Einlassende positioniert sind.

2. Querspritzkopfanordnung nach Anspruch 1, wobei die Einlassfläche jedes Strömungskanals (170, 180) größer als die Auslassfläche jedes Strömungskanals (170, 180) ist.

3. Querspritzkopfanordnung nach Anspruch 1 oder 2, wobei eine Tiefe jedes Strömungskanals (170, 180) von dem Einlassende zu dem Auslassende abnimmt.

4. Querspritzkopfanordnung nach wenigstens einem der vorhergehenden Ansprüche, wobei jeder Strömungskanal (170, 180) eine Innenkante aufweist, die einen kugelförmigen Vorsprung (316) aufweist.

5. Querspritzkopfanordnung nach wenigstens einem der vorhergehenden Ansprüche, wobei das Flächenverhältnis des Ausgangs zu dem Einlass in dem Bereich von 0,8 bis 0,98, vorzugsweise von 0,9 bis 0,96, liegt.

6. Querspritzkopfanordnung nach wenigstens einem der vorhergehenden Ansprüche, wobei die Breite des Strömungskanals (170, 180) von dem Einlass zu dem Auslass zunimmt.

7. Querspritzkopfanordnung nach wenigstens einem der vorhergehenden Ansprüche, die ferner eine entfernbare Kassette (400) umfasst, die in dem Innenschlitz (402) positioniert ist.

8. Querspritzkopfanordnung nach wenigstens einem der vorhergehenden Ansprüche, wobei der obere Stützblock (130) einen entfernbaren Strömungseinsatz aufweist und/oder der untere Stützblock (170) einen entfernbaren Strömungseinsatz aufweist.

9. Querspritzkopfanordnung nach wenigstens einem der vorhergehenden Ansprüche, wobei die erste Seite des Innenbereichs (150) einen entfernbaren Strömungseinsatz aufweist und/oder die zweite Seite des Innenbereichs (150) einen entfernbaren Strömungseinsatz aufweist.

10. Querspritzkopfanordnung nach wenigstens einem der vorhergehenden Ansprüche, wobei die Kassette (400) mehrere Löcher (462) zum Aufnehmen einer Kordlage aufweist.

11. Querspritzkopfanordnung nach Anspruch 10, wobei jedes Loch (462) eine Ausrichtungsnut (464) aufweist, die sich durch das Loch erstreckt.

12. Querspritzkopfanordnung nach wenigstens einem der vorhergehenden Ansprüche, wobei der Schlitz eine obere und eine untere Seitenwand und seitliche Seitenwände aufweist.

13. Querspritzkopfanordnung nach wenigstens einem der vorhergehenden Ansprüche, wobei der Schlitz (402) ein Auslassende aufweist, wobei eine Nase (460) der Kassette (400) den Auslass des Schlitzes (402) gegen Strömung abdichtet, so dass der Schlitz (402) von der Strömung isoliert ist.

14. Querspritzkopfanordnung nach wenigstens einem der vorhergehenden Ansprüche, wobei der Kopf (200) einen entfernbaren Einsatz (500) aufweist.

15. Querspritzkopfanordnung nach Anspruch 9 oder 14, wobei der entfernbare Einsatz (500) eine Dichtungskante (510) aufweist, die gegen das Kopfauslassloch positioniert ist.

## Revendications

1. Assemblage de filière du type à tête d'équerre pour son utilisation avec une extrudeuse, l'assemblage de filière du type à tête d'équerre (100) comprenant :
un tronçon d'entrée (160) qui possède une entrée pour la réception d'un écoulement à partir de l'extrudeuse ;
un bloc de support supérieur (130) qui est relié de manière amovible à un premier côté d'un tronçon interne (150) ;
un bloc de support inférieur (150) qui est relié de manière amovible à un deuxième côté du tronçon interne (150) ;
un premier passage d'écoulement (170) qui est disposé entre le bloc de support supérieur (130) et le tronçon interne (150) et qui est mis en communication par fluide avec l'entrée ;
un deuxième passage d'écoulement (180) qui est disposé entre le tronçon interne (150) et le bloc de support inférieur (150) et qui est mis en communication par fluide avec l'entrée ;
dans lequel l'assemblage de filière du type à tête d'équerre (100) comprend en outre une filière montée de manière amovible (200) qui est disposée à une extrémité de sortie de l'assemblage (100) ;
dans lequel le premier et le deuxième passage d'écoulement (170, 180) sont mis en communication par fluide avec une entrée de la filière (200) ; et
dans lequel le tronçon interne (150) comprend en outre une fente interne (402) qui s'étend à partir d'un premier côté de l'assemblage (100) dans la direction de l'entrée de la filière (200) ;
**caractérisé en ce que** le premier et le deuxième passage d'écoulement (170, 180) possèdent chacun une extrémité d'entrée et une nervure centrale surélevée (310, 312) qui est disposée à l'extrémité d'entrée.

2. Assemblage de filière du type à tête d'équerre selon la revendication 1, dans lequel la surface d'entrée de chaque passage d'écoulement (170, 180) est plus grande que la surface de sortie de chaque passage d'écoulement (170, 180).

3. Assemblage de filière du type à tête d'équerre selon la revendication 1 ou 2, dans lequel une profondeur de chaque passage d'écoulement (170, 180) diminue depuis l'extrémité d'entrée jusqu'à l'extrémité de sortie.

4. Assemblage de filière du type à tête d'équerre selon au moins une des revendications précédentes, dans lequel chaque passage d'écoulement (170, 180) possède un bord interne qui est doté d'une protrusion bombée (316).

5. Assemblage de filière du type à tête d'équerre selon au moins une des revendications précédentes, dans lequel le rapport de surface entre la sortie et l'entrée se situe dans la plage de 0,8 à 0,98, de préférence de 0,9 à 0,96.

6. Assemblage de filière du type à tête d'équerre selon au moins une des revendications précédentes, dans lequel la largeur des canaux d'écoulement (170, 180) augmente depuis l'entrée jusqu'à la sortie.

7. Assemblage de filière du type à tête d'équerre selon au moins une des revendications précédentes, qui comprend en outre une cassette amovible (400) qui est disposée dans la fente interne (402).

8. Assemblage de filière du type à tête d'équerre selon au moins une des revendications précédentes, dans lequel le bloc de support supérieur (130) possède une pièce rapportée d'écoulement amovible et/ou le bloc de support inférieur (170) possède une pièce rapportée d'écoulement amovible.

9. Assemblage de filière du type à tête d'équerre selon au moins une des revendications précédentes, dans lequel le premier côté du tronçon interne (150) possède une pièce rapportée d'écoulement amovible et/ou le deuxième côté du tronçon interne (150) possède une pièce rapportée d'écoulement amovible.

10. Assemblage de filière du type à tête d'équerre selon au moins une des revendications précédentes, dans lequel la cassette (400) possède un certain nombre de trous (462) pour la réception d'un câblé de nappe.

11. Assemblage de filière du type à tête d'équerre selon la revendication 10, dans lequel chaque trou (462) possède une rainure de mise en alignement (464) qui s'étend à travers ledit trou.

12. Assemblage de filière du type à tête d'équerre selon au moins une des revendications précédentes, dans lequel la fente possède des flancs supérieur et inférieur, ainsi que des flancs latéraux.

13. Assemblage de filière du type à tête d'équerre selon au moins une des revendications précédentes, dans lequel la fente (402) possède une extrémité de sortie ; dans lequel un nez (460) de la cassette (400) confère une étanchéité à la sortie de la fente (402) par rapport à l'écoulement, d'une manière telle que la fente (402) est isolée par rapport à l'écoulement.

14. Assemblage de filière du type à tête d'équerre selon au moins une des revendications précédentes, dans lequel la filière (200) possède une pièce rapportée amovible (500).

15. Assemblage de filière du type à tête d'équerre selon la revendication 9 ou 14, dans lequel la pièce rapportée amovible (500) possède un bord d'étanchéisation (510) qui est disposé contre le trou de sortie de la filière.
